# EUROPEAN PATENT APPLICATION

(11) **EP 0 686 828 A1**
(43) Date of publication of application: **13.12.1995**
(21) Application number: 95303826.2
(22) Date of filing: 05.06.1995
(51) Int. Cl.: G01B 15/02, G01N 23/16

(54) **Scanning apparatus**

(30) Priority: 08.06.1994 GB 9411468; 27.06.1994 GB 9412893
(71) Applicant: Beta Instrument Company Limited, High Wycombe Bucks. HP12 3SW (GB)
(72) Inventor: Kyriakis, John, Ealing, London W5 1HH (GB)
(74) Representative: Allsop, John Rowland

(57) **Abstract**

A scanning apparatus and method for determining the wall thickness of a travelling electrical cable formed in an extrusion process with a cable core being coated by the wall material, having a source for emitting a discrete beam of radiation such as x-rays or beta particles of sufficient energy to penetrate at least the wall of said cable. A suitable radiation detector is then positioned to receive the beam and provide output signals representative of the amount of radiation received thereby. A movable support carries the source and the detector as to cause the beam to scan the cable with means responsive to the output signals from the detector determining the amount of radiation absorbed by the cable as the beam scans the cable. Since the discrete beam of radiation has sufficient energy only to penetrate the wall of the cable and not the core, a measure may therefore be provided of the cable wall thickness.

## Description

### FIELD OF THE INVENTION

The present invention relates to scanning apparatus and particularly to scanning apparatus for measuring the wall thickness of elongated products such as plastic covered cables or other similar extrusions made up of dissimilar materials, these materials being metallic, plastics, glass, ceramics and similar.

### BACKGROUND OF THE INVENTION

In a typical extrusion process for producing electrical cables a metallic conductor is caused to travel through a plastics extrusion machine during which plastics material acting as an insulator or in some cases a semi-conducting coating, is extruded onto the metallic core material.

The process includes a cooling bath in which the cable product travels in order to solidify the plastics coating. A capstan machine pulls the cable through the extrusion line and subsequently winds it onto a storage drum.

It is desirable that at some point in this continuous process a system be positioned within the line for monitoring the wall thickness of the plastics or semi-conducting material extruded onto the metallic core.

Various systems exist at the present time for monitoring the wall thickness of the extruded plastics material so as to keep it at a constant value and the invention has as one of its objectives to improve upon such systems in the interests of accuracy of measurement with consequent increased efficiency of manufacturing process and subsequent use.

According to one aspect of the invention there is provided a scanning apparatus for determining the wall thickness of a travelling electrical cable formed in an extrusion process comprising a source for emitting a discrete beam of radiation of sufficient energy to penetrate at least the wall of the cable, a radiation detector positioned to receive the beam and provide output signals representative of the amount of radiation received thereby, a movable support carrying the source and the detector to cause the beam to scan the cable, and means responsive to said output signals from the detector to determine the amount of radiation absorbed by the cable as the beam scans the cable thereby to provide a measure of its wall thickness.

According to another aspect of the invention there is provided a method for determining the wall thickness of a travelling electrical cable formed in an extrusion process comprising providing a discrete beam of radiation of sufficient energy to penetrate at least the wall of the cable, scanning the cable with the beam, providing output signals representative of the amount of radiation passing through the cable, and determining the amount of radiation absorbed by the cable in response to said output signals thereby to provide a measure of its wall thickness.

Other features and advantages of the scanning apparatus according to the present invention will become apparent from the following detailed description of a preferred embodiment or embodiments thereof given as illustrative examples of putting the invention into effect.

### BRIEF DESCRIPTION OF THE DRAWINGS

The preferred embodiments disclosed herein will be described with reference to the accompanying drawings wherein;
Figs 1 through 5 are cross sectional views of a variety of electrical cables formed by an extrusion process to which the invention relates;
Fig 6 is a perspective view of scanning apparatus according to one embodiment of the invention;
Fig 7 is a schematic of an electrical circuit for operating the scanning apparatus of Fig 6 and Fig 7a is an illustration of the output from the conditioning unit of the circuit of Fig 7;
Fig 8 is a perspective view of scanning apparatus according to a further embodiment of the invention;
Fig 9 is a side view of a typical extrusion apparatus for electrical cables incorporating the invention;
Fig 10 is an illustration in perspective view of the use of the scanning apparatus of either Figs 6 or 8 in two different planes;
Fig 11 shows the scanning apparatus of either Fig 1 or Fig 3 mounted for rotation around the product to be measured; and
Fig 12 illustrates the scanning apparatus of the invention surrounded by a protective shield.

### PREFERRED EMBODIMENTS OF THE INVENTION

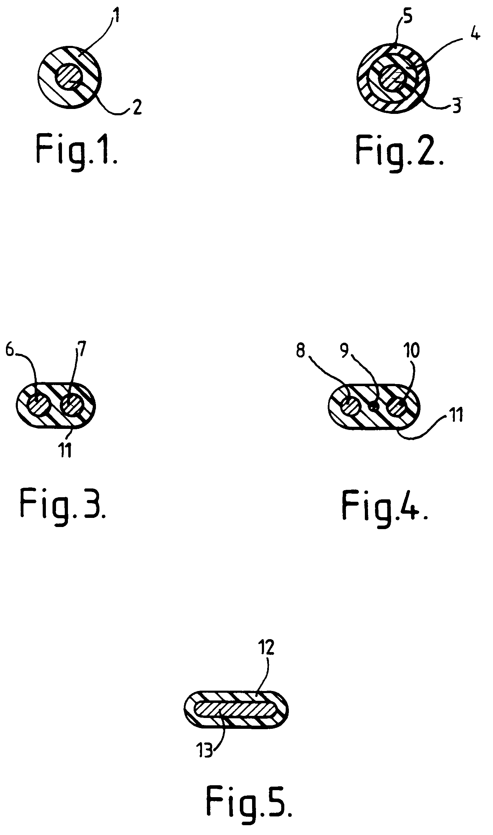

To illustrate the extrusion process and the results thereof to which this invention is directed, reference may be had to Fig 1 which shows several cross sectional views of a cable conductor having an inner metallic conducting core covered with a plastics coating.

The most common cable conductor is shown in Fig 1 having a single coating 1 around an inner metallic core 2.

The conductor cable shown in Fig 2 is of a double extrusion type in which an inner metallic core 3 is surrounded by two layers of insulating or plastics material 4, 5 extruded onto it.

Figs 3 and 4 show further constructions of a conductor cable having two cores 6, 7 and three conductor cores 8, 9, 10 respectively covered either by a single insulating layer 11 of plastics material or a double layer (not shown) if required.

In Fig 5 the cable extrusion 12 is formed around an inner metallic core 13 of non-circular cross section.

It is desirable that in all these processes the position of the core is known within the outer plastics or insulating coating so that the final product, be it a cable or strip extrusion, meets a specified design specification in terms of, for example, particular electrical and mechanical characteristics.

To achieve this objective, reference is now made to the other drawings.

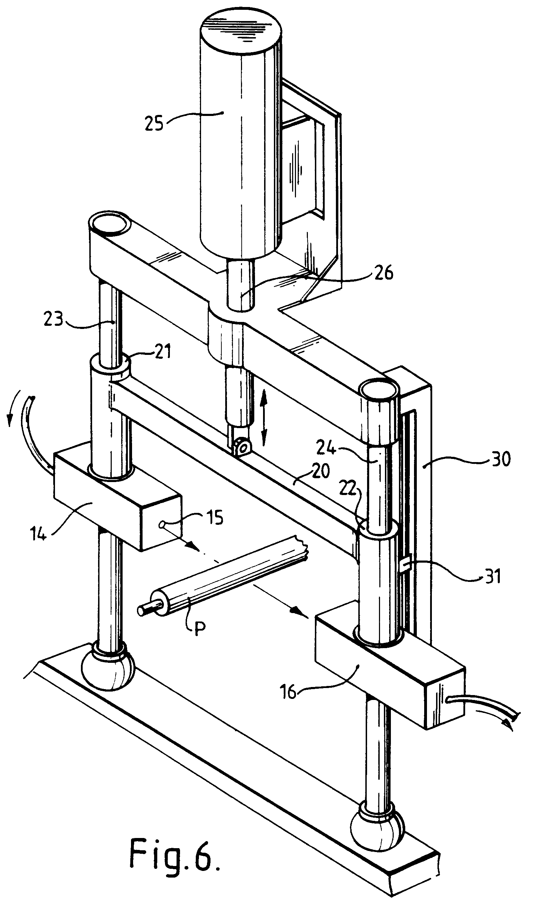

In Fig 6 a scanning apparatus is illustrated having a radiation source 14 emitting radiation through an aperture or pin hole 15, this radiation being received by a receiver 16.

The radiation source 14 is preferably one which emits "soft radiation" including Beta particles or x-rays which have a certain degree of penetration through a range of plastic or semi-conducting materials, but not necessarily through metallic substances.

The source of radiation would most preferably be of the photon emission type, and due to the fact that the source of radiation 14 is a point source, it is arranged in such a way so only a discrete beam will pass through the pin hole 15 and fall on the receiver 16, in which a radiation sensitive element such as a scintillation screen or photodiode, CCD (charge coupled device) or other solid state device, is positioned to provide an electrical signal proportional to the energy falling onto it.

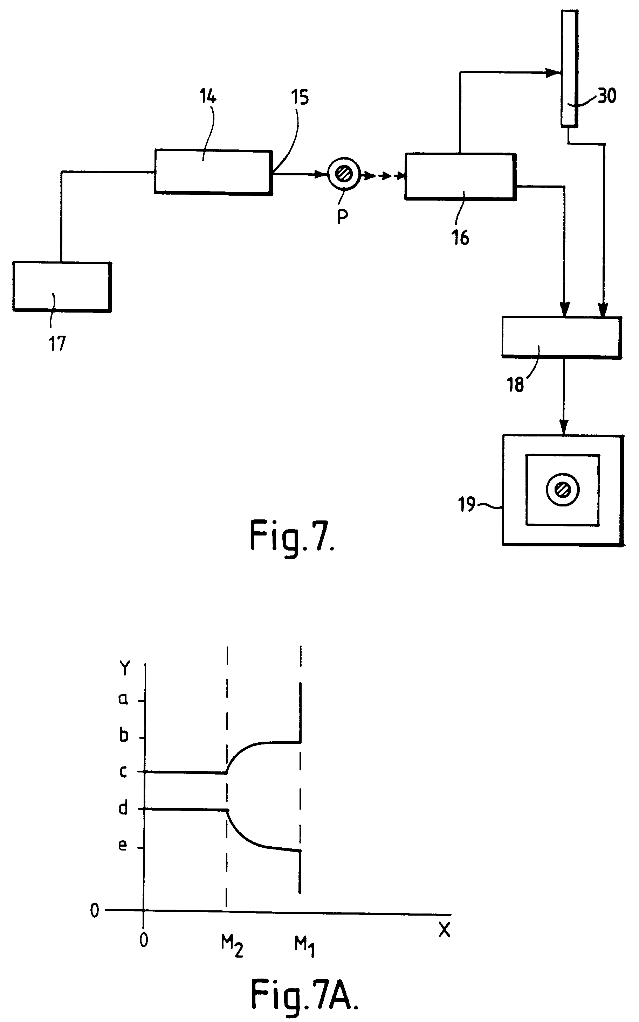

Fig 7 shows an electrical equivalent circuit diagram for the system as above described, in which the emitter 14 receives an electrical signal from a power unit 17, which can be adjusted manually so that the energy of the radiation emitted through the aperture 15 is sufficient to penetrate the outer plastic or other insulating material coating of the product P under observation.

The radiation sensitive element (or other suitable detector) of the receiver 16 outputs an electric signal proportional to the radiation energy falling onto it and supplies this to a modulating and conditioning circuit 18 which, in turn, translates the signal onto a VDU (visual display unit) 19 which provides a picture of the cross section of the product P.

As shown in Fig 6, the radiation source 14 and receiver 16 are mechanically mounted on a bracket or carriage 20 which carries at either end, linear bearings or sliding bushes 21, 22 which have the ability to slide freely along rods 23 and 24.

The bracket 20 can thus be oscillated to and fro past the path of the elongated product P at right angles to its direction of movement. This can be achieved by means of a linear actuator 25, which is either operated electrically, pneumatically or hydraulically and is coupled mechanically to a rod 26 which moves the bracket 20 in a direction at right angles to the path of the product P.

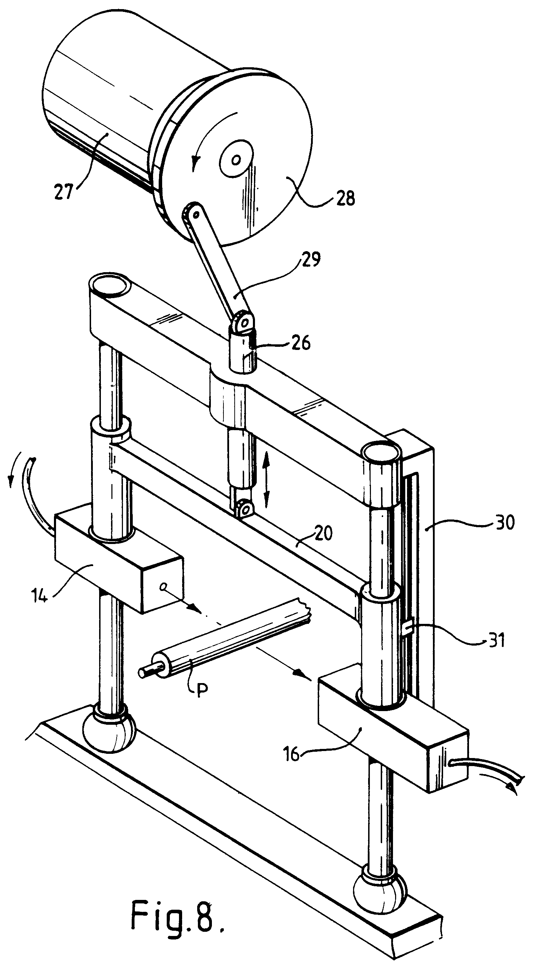

The rod 26 may be driven by an electric motor 27 as shown in Fig 8. The motor 27 carries a disc 28 and crank 29, so that as the disc 28 rotates, the crank 29 operates the rod 26 to move the emitter/receiver carriage 20 in a linear reciprocating mode at right angles to the path of product P.

As also illustrated in Figs 6 and 8, a transducer 30 is provided on the apparatus which, at all times, monitors the position of the carriage 20 with respect to the linear distance along the rods 23 and 24. An electric signal is generated by a component attachment 31 which is carried on the carriage 20 and thus either by an inductive, resistive, capacitive or similar method, an electrical output can be obtained giving the exact position in space of the carriage 20.

As illustrated in Fig 7, the signal from transducer 30 is fed into the conditioning circuit 18, so that irrespective of the type of movement of the carriage 20, a linearised output is obtained from circuit 18 which can then translate the scanning operation into a lineal movement, giving the correct output into the VDU display 19, thus presenting a true calibrated picture of the product P under test.

Thus as the cable is scanned the detector 16 electrically connected to the conditioning unit 18 will provide an output as shown in Fig 7a. The X axis displays the magnitude of the received signal and the Y axis displays the position of this signal with respect to the composite product 1, 2.

Thus at the start of the scan between a and b, magnitude M₁ on the X axis represents the full intensity of the radiant beam. The portion between b and c represents the magnitude of the signal lowering to M₂ as the beam is attenuated as it progresses through the coat 1 of the composite product 1, 2.

Between c and d on the Y axis represents the drop of the signal to zero as the beam is attenuated to zero magnitude by the metallic part 2 of the composite product 1, 2.

Position d-e represents a rising signal magnitude toward M₂ as the beam passes through the other side of the coat 1 of the composite product 1, 2 and at position e the signal increases to value M₁ as at this point there is no attenuation of the beam.

Consequently the trace of the graph represents a true picture of the section of the composite product 1, 2 and the position of the solid core 2 within the composite product 1, 2.

Thus a system is now provided by this invention which mechanically scans a linearly moving extruded product P and by adjusting the degree of penetration of the radiation by varying its energy, a true picture in profile of the position of the metallic conductor within the product P can be obtained, thus enabling the wall thickness of the insulating or otherwise semi-conducting material to be measured around that conductor.

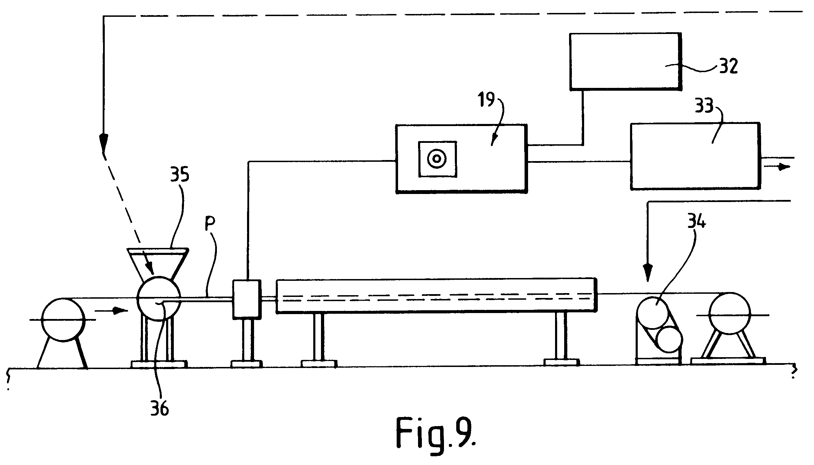

A complete electrical cable extrusion system which employs the scanning apparatus of this invention is shown in Fig 9, illustrating how the output from the radiation detector or receiver 16 can be used to control the extrusion process for accuracy.

To this end a required product wall thickness may be pre-set in a control circuit 32, which will, in turn, feed a signal into the VDU 19 as described with reference to Fig 7 to generate a corresponding control signal from a control unit 33, which can either operate on a speed capstan 34, controlling the speed of the extrusion line or make discrete adjustments to the output of the extruder 35 and/or control the extruder die 36, so that the wall thickness of the insulating material is constant around the conductor core.

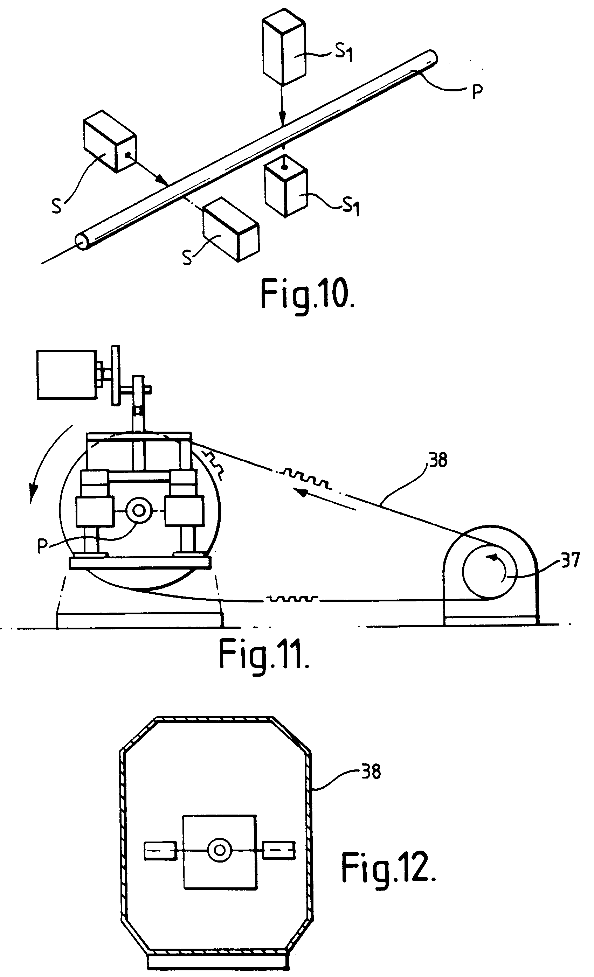

This scanning system of the invention can be extended into two planes - that is to say scanning can be performed with two systems S, S₁ positioned at 90° to each other, as shown in Fig 10, which may be a requirement when more complex products are examined.

Fig 11 shows this mechanical scanning system mounted on a continuously rotating device which can rotate around the product P, thus providing information from all around the product P on a continuous basis. In this instance a motor 37 drives through a belt 38, the complete scanning structure in a rotary motion around the product P under test. In a practical case, due to the fact that the radiation emitted through aperture 15 may be harmful to bystanders, it is advisable to use a shield 38 around the complete system as shown in Fig 12, therefore no stray radiation will fall on unsuspecting personnel.

The preferred embodiments of the invention may be summarised as follows:
Summary 1 - A mechanical scanning or oscillating system comprising of a carriage carrying a radiation source emitting a controlled number of rays through an aperture, this radiation being received by a radiation sensitive element in order that by scanning a product placed between the emitter and receiving units, examination of the product can take place by measurement of the degree of penetration of the radiation into the product under test.
Summary 2 - A mechanical oscillating or reciprocating or scanning system in which a radiation source is installed, emitting a controlled number of rays through an aperture; the rays being received by a radiation sensitive cell, whereby the structure carries a positional transducer so that at all times the position of the oscillating or scanning structure can be monitored.
Summary 3 - A method of operation as described in summary 2 above in which the radiation source may be Beta particles or x-rays which can be controlled in intensity by adjustment in order that the degree of penetration into the product under test can be varied to suit the material make-up of the product under test.
Summary 4 - A system as described in summaries 2 and 3 above in which the receiving unit houses a cell which is sensitive to radiation; this cell being a scintillation screen or a photodiode, CCD or other solid state detector.
Summary 5 - A system as described the summaries 3 and 4 above, in which the reciprocating or scanning system is operatedly a linear actuator energised from an electric, hydraulic or pneumatic source.
Summary 6 - The system as described in the above summaries in which the reciprocating, scanning movement is generated by a wheel and crank operated by an electric motor.
Summary 7 - A mechanical or oscillating system which embodies a radiation source of Beta particles or x-rays or the like, and in which a controlled number of rays are allowed to exit from an aperture; these rays being received by a radiation sensitive cell, being of the scintillating screen or photodiode, CCD or other solid state detector variety, and the system being used to examine a single or multi layered product; being made up of plastic, ceramic or other insulating materials; being extruded or placed on metallic, electrical conducting core or cores, and by adjustment of the intensity of the radiation, various penetration levels can be obtained into the product under examination, and thus a true section profile of the product can be obtained on a VDU.
Summary 8 - The system as described above which is placed at right angles to the linear path of movement of the product.
Summary 9 - The system described above in which two systems can be placed at right angles to examine a product in x and y planes.
Summary 10 - The system as described above which can be mounted on a continuously rotating device mounted at right angles to the path of the product.
Summary 11 - The system as described in summaries 1, 2 and 3 which provides the output with which a control signal may be obtained by which the layer or layers of insulating materials placed on top of the metallic conductor may be regulated or controlled.

## Claims

1. A scanning apparatus for determining the wall thickness of a travelling electrical cable formed in an extrusion process and having a cable core coated with said wall comprising a source for emitting a discrete beam of radiation of sufficient energy to penetrate at least the wall of said cable, a radiation detector positioned to receive said beam and provide output signals representative of the amount of radiation received thereby, a movable support carrying said source and said detector to cause said beam to scan said cable, and means responsive to said output signals from said detector to determine the amount of radiation absorbed by said cable as said beam scans said cable thereby to provide a measure of its wall thickness.

2. A scanning apparatus as claimed in claim 1 characterised in that said radiation source emits x-rays or beta particles.

3. A scanning apparatus as claimed in claim 1 or claim 2 characterised in that said radiation detector is a scintillation or solid state detector.

4. A scanning apparatus as claimed in any preceding claim characterised in that said source and said detector are arranged such that said beam is substantially perpendicular to said cable.

5. A scanning apparatus as claimed in any preceding claim characterised in that said movable support comprises a carriage carrying said source and said detector, a carriage support constraining said carriage to move linearly and a linear actuator to drive said carriage to cause said beam to scan said cable.

6. A scanning apparatus as claimed in claim 5 characterised in that said scanning apparatus further comprises a transducer for providing an output representative of the position of said carriage.

7. A scanning apparatus as claimed in claim 6 characterised in that said means responsive to said output signals from said detector is further responsive to said output from said transducer to provide a linearised output representative of said cable wall thickness.

8. A scanning apparatus as claimed in claim 7 characterised in that said linearised output is displayed by means of a visual display unit.

9. A scanning apparatus as claimed in any preceding claim characterised in that said scanning apparatus further comprises a second source for emitting a second discrete beam of radiation of sufficient energy to penetrate at least the wall of the cable, a second radiation detector positioned to receive said second beam and provide further output signals representative of the amount of radiation received thereby, said means responsive to said output signals from said detector being further responsive to said further output signals from said second detector, and a second movable support carrying said second source and said second detector to cause said second beam to scan said cable, said second source and said second detector being arranged offset along said electrical cable and such that said second beam is substantially perpendicular to said beam to provide a measure of said cable wall thickness in two substantially orthogonal planes.

10. A scanning apparatus as claimed in any of claims 1 to 8 characterised in that said movable support is mounted to a rotatable support for rotating around said cable to provide a measure of said cable wall thickness all around said cable.

11. A scanning apparatus as claimed in any preceding claim characterised in that said scanning apparatus further comprises a radiation shield enclosure to prevent any stray portions of said radiation exiting said scanning apparatus.

12. A method for determining the wall thickness of a travelling electrical cable formed in an extrusion process comprising providing a discrete beam of radiation of sufficient energy to penetrate at least the wall of said cable, scanning said cable with said beam, providing output signals representative of the amount of radiation passing through said cable, and determining the amount of radiation absorbed by said cable in response to said output signals thereby to provide a measure of its wall thickness.

13. A method as claimed in claim 12 characterised in providing a second discrete beam of radiation substantially perpendicular to said beam of sufficient energy to penetrate at least the wall of the cable and scanning the cable with said second beam thereby to provide a measure of said cable wall thickness in two substantially orthogonal planes.

14. A method as claimed in claim 12 characterised in rotatably scanning the beam around said cable thereby to provide a measure of said cable wall thickness all around said cable.
